# EUROPEAN PATENT APPLICATION

(11) **EP 4 657 698 A1**
(43) Date of publication of application: **03.12.2025**
(21) Application number: 23925045.9
(22) Date of filing: 04.12.2023
(51) Int. Cl.: H02J 3/38, H02J 3/00, H02J 3/02

(54) **MICRO-GRID SYSTEM**

(30) Priority: 28.02.2023 CN 202310223567
(71) Applicant: Huawei Digital Power Technologies Co., Ltd., Shenzhen, Guangdong 518043 (CN)
(72) Inventor: ZHANG, Lingjie, Shenzhen, Guangdong 518043 (CN); MAO, Yahui, Shenzhen, Guangdong 518043 (CN); SHE, Hongwu, Shenzhen, Guangdong 518043 (CN)
(74) Representative: Isarpatent
(86) International application number: PCT/CN2023/136143
(87) International publication number: WO 2024/179099

(57) **Abstract**

This application provides a microgrid system. The system includes a first photovoltaic power generation system, an alternating current bus, a UPS (Uninterrupted Power System, uninterruptible power supply), a first switch, and a second switch. When a photovoltaic power generation system meets a power generation condition, the first photovoltaic power supply system directly or indirectly supplies power to the UPS. After the UPS is activated, the UPS supplies power to units such as a monitoring unit and a control unit of the microgrid system, so that a system controller can control another energy storage power supply system and photovoltaic power generation system in the microgrid to start, and the entire microgrid can automatically start and restore to a normal and stable running state.

## Description

This application claims priority to Chinese Patent Application No. 202310223567.4, filed with the China National Intellectual Property Administration on February 28, 2023 and entitled "MICROGRID SYSTEM", which is incorporated herein by reference in its entirety.

### TECHNICAL FIELD

This application relates to a microgrid system.

### BACKGROUND

An alternating current-coupled photovoltaic-storage microgrid system is always a mainstream microgrid system structure due to advantages such as good scalability. Sudden cases such as voltage fluctuation and fault ride-through may occur in running of the microgrid system. Therefore, secondary monitoring systems such as a microgrid controller, a subarray data collector, and a battery control device in the microgrid system usually need to be powered by a UPS or directly powered by a microgrid to ensure their running.

When electric energy in an energy storage system is insufficient in bad weather in running of the microgrid, the microgrid cannot continue maintaining system running. Therefore, there are two choices for the microgrid: (1) A diesel generator is configured to maintain electric energy supply. (2) The microgrid is shut down and a sufficient energy storage SOC (State of Charge, state of charge) is retained to support power consumption of black start after the weather recovers. After the weather recovers in the next morning, PV (Photo Voltaic, photovoltaic) can generate electric energy and then the microgrid starts to run.

A diesel generator set has heavy operation, maintenance and inspection workload, high technical capability requirements, complex management, and high fuel costs, which is not conducive to use of the diesel generator set in remote or underdeveloped areas. A fuel-free solution is a better power supply solution for these areas.

However, after the entire microgrid is powered off due to a fault or insufficient electric energy, the UPS and the monitoring system of the microgrid are quickly shut down due to power deficit. When a condition is met on the next day (light is restored), the microgrid system can only remain in a power failure state due to lack of automatic start and automatic restoration capabilities or mechanisms. Alternatively, the microgrid system has to be restarted by operation and maintenance personnel. As a result, power failure and operation and maintenance costs of the microgrid are high. Especially for a small-sized low-voltage microgrid system, operation and maintenance pressure is great, and user experience is poor.

It is necessary to enable the alternating current-coupled photovoltaic-storage microgrid to automatically start and automatically restore in a timely manner after the microgrid meets the condition of running restoration.

### SUMMARY

To resolve a problem that an existing black startup manner of a microgrid depends on a state of charge of a battery and remaining oil of a diesel generator, embodiments of this application provide a microgrid system.

According to a first aspect, in a first possible embodiment, this application provides a microgrid system, including a first photovoltaic power generation system, an alternating current bus, a UPS (Uninterrupted Power System, uninterruptible power supply), a first switch, and a second switch, where the first photovoltaic power generation system includes at least one first photovoltaic power generation unit and at least one first photovoltaic inverter, is connected to the UPS through the first switch, is connected to the alternating current bus through the second switch, and is configured to supply power to the UPS through the first switch or supply power to the alternating current bus through the second switch; and the alternating current bus is connected to the UPS through the first switch, and is configured to supply power to the UPS when powered on.

It may be understood that, in an automatic start process of a microgrid, several steps are usually performed to sequentially start units, and finally, the entire microgrid starts to run normally again. The UPS is usually configured to provide a stable and uninterrupted alternating current. The UPS is usually configured with a battery, to ensure that when an external power supply of the UPS is unstable or stops supplying power, the UPS can still output a stable and uninterrupted alternating current for a period of time. When the microgrid does not work, for example, at night, a photovoltaic power generation system does not meet a power generation condition and an energy storage system is also short of power and cannot supply power to the microgrid, the microgrid cannot work, and control and management units in the microgrid continue to work for a period of time through the UPS. However, after power in the battery of the UPS is exhausted, the UPS also stops supplying power to the units. In this case, the entire microgrid system including the control and management unit stops running. When the microgrid meets a running condition, for example, when sunlight is sufficient in daytime, running of the microgrid needs to be restarted. First, the control and management units in the system needs to be activated, for example, a system controller in this embodiment of this application. After the control and management units in the microgrid is powered on and activated, corresponding start control may be performed based on specific statuses of a power generation system (for example, the photovoltaic power generation system in this embodiment of this application) and an energy storage system (for example, an energy storage power supply system in this embodiment of this application) in the microgrid, to restore the microgrid to a normal power supply state. In this embodiment of this application, it is usually selected that when the photovoltaic power generation system has a power generation capability, the UPS is first automatically activated directly or indirectly, the control and management units are activated through the UPS, and then the photovoltaic power generation system and the energy storage power supply system are activated to work, to finally implement automatic start of the microgrid. It should be understood that there may be a plurality of photovoltaic power generation systems in a power supply system of the microgrid, and the plurality of photovoltaic power generation systems usually directly supplies power to the alternating current bus. However, in this embodiment of this application, a power supply cable is led out from one of the photovoltaic power generation systems to the UPS, so that the photovoltaic power generation system can supply power to the UPS in addition to supplying power to the alternating current bus. When the photovoltaic power generation system has the power generation capability, the UPS may be activated immediately, so that the UPS can activate the system controller, and the system controller then determines, based on overall conditions of another photovoltaic power generation system and energy storage power supply system, time for restarting the microgrid, and restarts the microgrid when photovoltaic power supply and storage power supply are sufficient. In this system architecture design that can implement automatic start of the microgrid system, a function of automatic power generation of the photovoltaic power generation system is cleverly used, and the microgrid system does not need to be adjusted too much, and does not need to be additionally configured with another power supply device or controller, so that the microgrid system can have an automatic start function at lowest costs. It should be understood that the first photovoltaic power generation system in this embodiment of this application may be any one of the photovoltaic power generation systems. In actual application, the first photovoltaic power generation system needs to be configured to directly activate the UPS through a relay, and may be disposed at a position close to the UPS, to reduce cable costs and a current transmission loss.

With reference to the first possible embodiment of the first aspect, in a second possible embodiment, the first switch includes a first contact KA1 and a second contact KA2; the first photovoltaic power generation system is connected to the UPS through the second contact KA2; and the alternating current bus is connected to the UPS through the first contact KA1.

With reference to the first or the second possible embodiment of the first aspect, in a third possible embodiment, the first contact KA1 is configured to: be disconnected when the alternating current bus is powered off; and be connected when the alternating current bus is powered on; and the second contact KA2 is configured to: be connected when the alternating current bus is powered off; and be disconnected when the alternating current bus is powered on.

With reference to the second or the third possible embodiment of the first aspect, in a fourth possible embodiment, when an available power generation power of the first photovoltaic power generation system is greater than a first photovoltaic power supply threshold, the first photovoltaic power generation system supplies power to the alternating current bus through the second switch, so that the alternating current bus supplies power to the UPS through the first contact KA1; or when an available power generation power of the first photovoltaic power generation system is greater than or equal to a first photovoltaic power supply threshold, the first photovoltaic power generation system supplies power to the UPS through the second contact KA2.

With reference to the fourth possible embodiment of the first aspect, in a fifth possible embodiment, if the second switch is in an off state, when the available power generation power of the first photovoltaic power generation system is greater than or equal to the first photovoltaic power supply threshold, the first photovoltaic power generation system supplies power to the UPS through the second contact KA2.

With reference to the fourth possible embodiment of the first aspect, in a sixth possible embodiment, if the second switch is in an on state, when the available power generation power of the first photovoltaic power generation system is greater than the first photovoltaic power supply threshold, the first photovoltaic power generation system supplies power to the alternating current bus through the second switch, so that the alternating current bus supplies power to the UPS through the first contact KA1.

It should be understood that, if the second switch is a normally closed switch, when the alternating current bus is in a power-off state, the second switch is in the on state. When the available power generation power of the first photovoltaic power generation system is greater than the first photovoltaic power supply threshold, after the first photovoltaic power generation system starts to supply power to the outside, the alternating current bus is quickly powered on, the first contact KA1 of the relay is connected, and the second contact KA2 is disconnected. In this case, the first photovoltaic power generation system indirectly supplies power to the UPS through the alternating current bus. If the second switch is a normally open switch, when the alternating current bus is in a power-off state, the second switch is in the off state. When the available power generation power of the first photovoltaic power generation system is greater than the first photovoltaic power supply threshold, after the first photovoltaic power generation system starts to supply power to the outside, a supplied current flows to the UPS through the second contact KA2, so that the UPS is powered on.

It should be noted that, the relay is designed not only to implement that the first photovoltaic power generation system directly or indirectly supplies power to the UPS in the two scenarios, but also to automatically switch to a state in which the first contact KA1 is disconnected and the second contact KA2 is connected when a circuit on an alternating current bus side is faulty in a running process of the microgrid. This ensures safety of other units of the microgrid, and maintains power supplying to the UPS, that is, to monitoring and management systems, and it is convenient to continue observing a condition of the entire microgrid through the monitoring and management systems.

With reference to any one of the first to the sixth possible embodiments of the first aspect, in a seventh possible embodiment, at least one second photovoltaic power generation system and a system controller are further included, where the UPS is connected to the system controller, and is configured to supply power to the system controller; each second photovoltaic power generation system includes at least one second photovoltaic power generation unit and at least one second photovoltaic inverter, and is configured to supply power to the alternating current bus; and the system controller is configured to control the first photovoltaic power generation system and/or the second photovoltaic power generation system to supply power to the alternating current bus.

It should be understood that the microgrid system may have a plurality of photovoltaic power generation systems, so that the microgrid has a more sufficient power supply source. In addition, the system controller is configured to better monitor and control each photovoltaic power generation system, so that power supplying in the microgrid can be flexibly dispatched. In a possible embodiment provided in this application, one of the photovoltaic power generation systems, that is, the first photovoltaic power generation system, is selected, and the photovoltaic power generation system has the automatic start function. When the available power generation power of the photovoltaic power generation system reaches the first power supply threshold, the photovoltaic power generation system automatically supplies power to the alternating current bus or the UPS, so that the UPS can supply power to the system controller. In this way, when the system and an external environment condition meet a condition that the photovoltaic power generation system supplies power to the outside, the system controller can quickly resume working, and then the system controller can further control another photovoltaic power generation system, that is, the second photovoltaic power generation system, based on a preset condition or manual control, to supply power to the alternating current bus. In this case, if a line between the first photovoltaic power generation system and the alternating current bus is not connected, that is, the second switch is in the off state, the system controller may synchronously control the second switch to be on, so that the first photovoltaic power generation system may also supply power to the alternating current bus. Then, the UPS obtains power from the alternating current bus.

With reference to any one of the first to the seventh possible embodiments of the first aspect, in an eighth possible embodiment, at least one energy storage power supply system is further included, where the energy storage power supply system includes at least one energy storage unit and at least one energy storage converter, and is configured to supply power to the alternating current bus or receive power from the alternating current bus; and the system controller is further configured to control the energy storage power supply system to supply power to the alternating current bus, or configured to control the alternating current bus to supply power to the energy storage power supply system.

It should be understood that, in the microgrid, the energy storage power supply system may also be disposed to maintain stable power supply to the microgrid when the photovoltaic power generation system cannot generate power at night or power generated by the photovoltaic power generation system is insufficient in a bad weather condition. Therefore, when stored electric energy of the energy storage power supply system is sufficient, the system controller may schedule the energy storage power supply system to supply power to the alternating current bus. When stored electric energy of the energy storage power supply system is insufficient, the system controller may also schedule the alternating current bus to supply power to the energy storage power supply system. After the stored electric energy of the energy storage power supply system is high enough, the energy storage power supply system is configured to supply power to the alternating current bus.

With reference to the eighth possible embodiment of the first aspect, in a ninth possible embodiment, the system controller is configured to: when a sum of the available power generation power of the first photovoltaic power generation system and an available power generation power of the second photovoltaic power generation system is greater than a second photovoltaic power supply threshold, control the first photovoltaic power generation system and/or the second photovoltaic power generation system to supply power to the alternating current bus, and control the alternating current bus to supply power to the energy storage power supply system, so that the energy storage power supply system is restored to a running state.

It should be understood that the energy storage power supply system generates specific power consumption in a running process. Therefore, if the energy storage power supply system needs to be further started, available power generation powers of all photovoltaic power generation systems need to cover power consumption of the energy storage power supply system. The start under such a condition can ensure that overall running of the microgrid is not in a power deficit state.

With reference to the eighth or the ninth possible embodiment of the first aspect, in a tenth possible embodiment, the system controller is configured to: when the energy storage power supply system is in the running state, if stored electric energy of the energy storage power supply system is greater than or equal to an energy storage power supply threshold, control the energy storage power supply system to supply power to the alternating current bus; or when the energy storage power supply system is in the running state, if stored electric energy of the energy storage power supply system is less than an energy storage power supply threshold, control the alternating current bus to charge the energy storage power supply system.

It should be understood that, after the energy storage power supply system is restored to run, an SOC (state of charge, State of Charge) of an energy storage unit of the energy storage power supply system further needs to be considered to determine whether to control the energy storage power supply system to supply power to the outside or need the outside to charge the energy storage power supply system. In a possible embodiment provided in this application, the system controller further determines, based on the stored electric energy of the energy storage power supply system, that is, actually, the SOC of the energy storage unit of the energy storage power supply system, whether to control the energy storage power supply system to supply power to the alternating current bus or control the alternating current bus to charge the energy storage power supply system.

According to the microgrid system provided in embodiments of this application, after a power failure occurs in the microgrid, when light is restored, running of a monitoring and control system can be automatically first restored without manual operation and maintenance, and start time of each unit in the system is set, so that an alternating current-coupled photovoltaic-storage power generation system can maximize use of electric energy in an energy storage battery, without worrying about a problem that the alternating current-coupled photovoltaic-storage power generation system cannot be started after the power failure.

### BRIEF DESCRIPTION OF DRAWINGS

FIG. 1 shows a microgrid system according to an embodiment of this application;
FIG. 2 shows another microgrid system according to an embodiment of this application; and
FIG. 3 shows still another microgrid system according to an embodiment of this application.

### DESCRIPTION OF EMBODIMENTS

To make the objectives, technical solutions, and advantages of the technical solutions in this application clearer, the following describes embodiments of the technical solutions in this application in detail with reference to the accompanying drawings. It should be noted that embodiments in this application and the features in embodiments may be mutually combined in the case of no conflict.

A microgrid system is usually used to continuously and stably supply power to various types of loads in an off-grid (separated from a power grid) state. Certainly, a microgrid may also be used in a grid-connected (connected to the power grid) scenario. This is not specifically limited in embodiments of this application. An ultimate power supply source of a microgrid is photovoltaic power generation. A photovoltaic power generation system is configured to: convert a direct current generated by a solar photovoltaic panel into an alternating current, input the alternating current to the power grid; and supply power to the loads through the power grid. In some scenarios, the microgrid may be further configured with some energy storage systems. When there is a surplus of electric energy generated by photovoltaic, the energy storage system stores the surplus electric energy. When the electric energy generated by photovoltaic is insufficient or zero, the energy storage system supplies power to the microgrid, to implement stable power supply to the microgrid. Mutual dispatch of such power supplying all needs to be allocated by a control center (such as a monitoring and management system). Normal running of the microgrid needs to be based on normal running of the control center.

The microgrid system provided in this application is applicable to a problem that after the microgrid is powered off, when light is restored, the microgrid cannot automatically start to restore power supply to the microgrid. Further, in a start process, time for starting a photovoltaic-storage device to restore running can be accurately determined, to reduce electric energy consumption of blind start or a start failure caused by an insufficient power generation capability.

In some microgrids, if the power grid is powered off, all devices in the entire power grid are in a power shortage state. Even after the photovoltaic power generation system restores a power generation capability, because the monitoring and control system cannot automatically restore running in a case of no external power supply, it is impossible to control the photovoltaic-storage system to supply power to the microgrid normally. After a power grid system is powered off, when the photovoltaic power generation system restores the power generation capability due to light, the photovoltaic power generation system is used to establish a voltage, and power is supplied to a UPS through a relay branch. After the monitoring and control system is restored and is powered on for running, and an available power generation capability of photovoltaic is further evaluated to reach a predetermined threshold, an alternating current bus voltage and the photovoltaic-storage system are gradually restored under control of the control system, and normal running of the microgrid is restored, to supply power to the external load normally.

In embodiments provided in this application, the photovoltaic power generation system may not only supply power to the microgrid in a normal running process of the microgrid, but also first supply power to the UPS after the microgrid is powered off and when the photovoltaic power generation system has the power generation capability, and then the UPS supplies power to a system controller. Finally, automatic restoration and automatic start of the microgrid are implemented under control of the system controller.

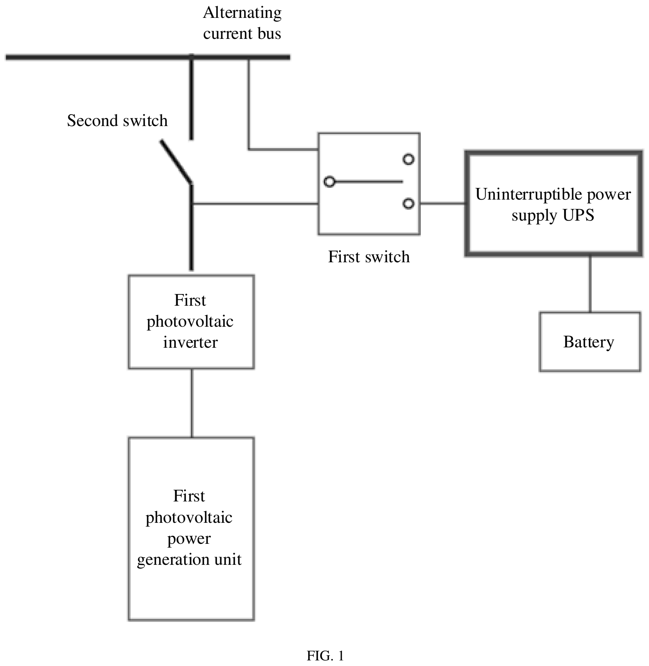

FIG. 1 in the accompanying drawings of the specification shows an example of a microgrid system according to an embodiment of this application. As shown in FIG. 1, the system includes a first photovoltaic power generation system, an alternating current bus, a UPS (Uninterrupted Power System, uninterruptible power supply), a first switch, and a second switch.

As shown in FIG. 1, the first photovoltaic power generation system includes one first photovoltaic power generation unit and one first photovoltaic inverter, or certainly may include a plurality of first photovoltaic power generation units and a plurality of first photovoltaic inverters. This is not specifically limited in this embodiment of this application. The first photovoltaic power generation system is connected to the UPS through the first switch, and is connected to the alternating current bus through the second switch. In this system structure, the first photovoltaic power generation system may supply power to the UPS through the first switch, or may supply power to the alternating current bus through the second switch. In addition, the alternating current bus is also connected to the UPS through the first switch, and may be configured to supply power to the UPS when the alternating current bus is powered on. After being powered, the UPS is activated to work. The UPS is usually further configured with a battery. When the outside supplies unstable power to the UPS, the UPS can still output a stable 220 V alternating current to the outside. In this way, another monitoring unit and control unit of a microgrid can work normally under power supplying of the UPS.

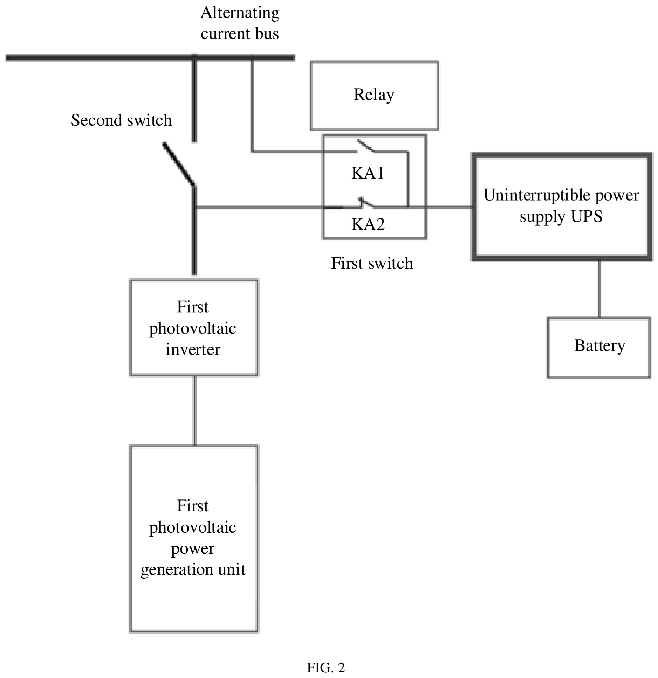

Further, in a possible embodiment, the first switch includes a first contact KA1 and a second contact KA2. Refer to FIG. 2. The first photovoltaic power generation system is connected to the UPS through the second contact KA2, and the alternating current bus is connected to the UPS through the first contact KA1. When the alternating current bus is powered off, the first contact KA1 is disconnected, and the second contact KA2 is connected. In this case, the first photovoltaic power generation system may supply power to the UPS. When the alternating current bus is powered on, the first contact KA1 is connected, and the second contact KA2 is disconnected. In this case, the alternating current bus may supply power to the UPS. The first switch in this embodiment of this application may be a common knob switch. The first contact KA1 and the second contact KA2 may be disconnected or connected in a manual control manner, or a relay may be used. The first contact KA1 and the second contact KA2 are disconnected or connected through electric adsorption of a coil (not shown in the figure) of the relay. Certainly, a person skilled in the art may alternatively disconnect or connect the first contact KA1 and the second contact KA2 through another switch component having a similar function. Selection of the first switch is not specifically limited in this embodiment of this application. After the UPS has a power supply source, the UPS may supply power to other possible devices in the microgrid, for example, units responsible for monitoring and management. Therefore, the first photovoltaic power generation system has two paths for supplying power to the UPS, where a path 1 is: supplying power to the alternating current bus through the second switch, so that the alternating current bus may supply power to the UPS through the first contact KA1; and a path 2 is: directly supplying power to the UPS through the second contact KA2. It should be noted that a prerequisite for the first photovoltaic power generation system to directly or indirectly supply power to the UPS is that an available power generation power of the first photovoltaic power generation system is greater than or equal to a first photovoltaic power supply threshold. In a possible embodiment provided in this application, the first photovoltaic inverter in the first photovoltaic power generation system may automatically detect a voltage at a PV (Photovoltaic) input end. When the voltage at the PV input end reaches a specific value, it may be considered that an available power generation power that can be provided by the first photovoltaic power generation system reaches a level greater than or equal to a first photovoltaic power supply threshold, and the first photovoltaic inverter automatically starts to run, and converts a direct current at the PV input end into an alternating current for output. A value of the first photovoltaic power supply threshold may be set based on a requirement of the UPS for supplying power to the outside. This is not specifically limited in this embodiment of this application.

Specifically, whether the first photovoltaic power generation system supplies power to the UPS through the path 1 or the path 2 depends on an on/off state of the second switch. For example, if the second switch is in an off state, when the first photovoltaic power generation system meets a power supply condition, that is, when the available power generation power of the first photovoltaic power generation system is greater than the first photovoltaic power supply threshold, the first photovoltaic power generation system supplies power to the UPS through the second contact KA2. If the second switch is in an on state, when the first photovoltaic power generation system meets a power supply condition, that is, when the available power generation power of the first photovoltaic power generation system is greater than the first photovoltaic power supply threshold, the first photovoltaic power generation system supplies power to the alternating current bus through the second switch, and then the alternating current bus supplies power to the UPS through the first contact KA1. Optionally, in selection of the switch component, the second switch may be set as a normally open switch. When the microgrid is in a power-off state, and there is no system controller or manual external force to turn on the second switch, the second switch is in the off state. In this case, when the first photovoltaic power generation system meets the power supply condition, that is, when the available power generation power of the first photovoltaic power generation system is greater than the first photovoltaic power supply threshold, the first photovoltaic power generation system supplies power to the UPS through the second contact KA2. Similarly, if the second switch is set as a normally closed switch, and there is no system controller or manual external force to turn off the second switch, the second switch is in the on state. In this case, when the first photovoltaic power generation system meets the power supply condition, that is, when the available power generation power of the first photovoltaic power generation system is greater than the first photovoltaic power supply threshold, the first photovoltaic power generation system supplies power to the alternating current bus through the second switch, and then the alternating current bus supplies power to the UPS through the first contact KA1. Certainly, a person skilled in the art may alternatively set the second switch to be off or on through another switch component having a similar function. Selection of the second switch is not specifically limited in this embodiment of this application.

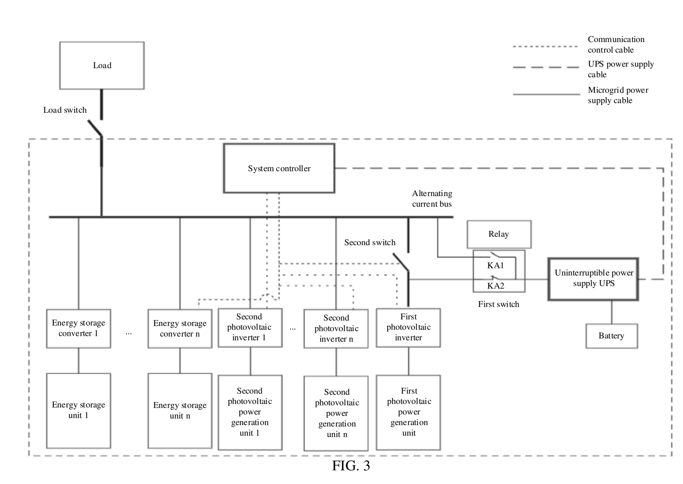

After a power supply problem of the UPS before the microgrid system automatically starts is resolved, another microgrid system provided in an embodiment of this application further includes at least one second photovoltaic power generation system and a system controller. As shown in FIG. 3, a UPS is connected to the system controller, and is configured to supply power to the system controller. The second photovoltaic power generation system includes one second photovoltaic power generation unit and one second photovoltaic inverter, and is configured to supply power to an alternating current bus. Certainly, the second photovoltaic power generation system may alternatively include a plurality of second photovoltaic power generation units and a plurality of second photovoltaic inverters. This is not specifically limited in this embodiment of this application. The system controller is communicatively connected to a first photovoltaic power supply system, the second photovoltaic power supply system, and a second switch, may control the second switch to be off or on, and is configured to control the first photovoltaic power generation system and/or the second photovoltaic power generation system to supply power to the alternating current bus. Specifically, when the second switch is a normally open switch, if both the first photovoltaic system and the second photovoltaic system need to be controlled to supply power to the alternating current bus, the system controller may first control the second switch to be on, and then control both the first photovoltaic power generation system and the second photovoltaic power generation system to supply power to the alternating current bus. When the second switch is a normally closed switch, the first photovoltaic power generation system may have an automatic start function, and the first photovoltaic power generation system is connected to the alternating current bus. When an automatic start condition is met, the first photovoltaic power generation system may automatically supply power to the alternating current bus directly or indirectly. The system controller may continue to control the second photovoltaic power generation system to supply power to the alternating current bus, so that the first photovoltaic power generation system and the second photovoltaic power generation system supply power to the alternating current bus.

It should be understood that a basic function of the second switch is to be quickly off when a fault occurs on a circuit at either of two ends of the second switch, to ensure that the other circuit is not affected. Therefore, in actual application, one second switch may be configured for all photovoltaic power generation systems. For ease of discussion, in this embodiment of this application, impact of the second switch corresponding to the first photovoltaic power supply system on automatic start of the microgrid system is merely described as an example.

In a possible implementation, still refer to FIG. 3. The microgrid system may further include at least one energy storage power supply system. Introduction of the energy storage power supply system can improve stability of power supplying. When stored electric energy is large enough, continuous power supply to the microgrid can be maintained when the photovoltaic power generation system does not have a power generation condition (for example, at night). The energy storage power supply system may include one or more energy storage units and one or more energy storage converters. The energy storage unit is configured to store electric energy, and may be a lithium iron phosphate battery, a lead-acid battery, or the like. A specific type of the battery is not specifically limited in this embodiment of this application. The energy storage converter may convert a direct current output by the energy storage unit into an alternating current and output the alternating current to the alternating current bus, so that the energy storage power supply system supplies power to the alternating current bus; or may convert an alternating current input by the alternating current bus into a direct current and input the direct current to the energy storage unit, so that the alternating current bus charges the energy storage power supply system.

It should be noted that, a prerequisite for charging or discharging the energy storage power supply system is that the energy storage power supply system should be in a running state, and specific power consumption is generated in the running process. Before charging and discharging, the system controller needs to control the alternating current bus to supply power to the energy storage power supply system, to wake up the energy storage power supply system and enable the energy storage power supply system to enter the running state.

It should be understood that, a prerequisite for controlling, by the system controller, the alternating current bus to supply power to the energy storage power supply system is that an available power generation power of the first photovoltaic power generation system and an available power generation power of the second photovoltaic power generation system need to be greater than power consumption of the energy storage power supply system during running. Otherwise, after the energy storage power supply system is woken up, the microgrid is in a power deficit state as a whole. Therefore, in actual application, a second photovoltaic power supply threshold may be set. When a sum of the available power generation power of the first photovoltaic power generation system and the available power generation power of the second photovoltaic power generation system is greater than the second photovoltaic power supply threshold, the first photovoltaic power generation system and/or the second photovoltaic power generation system may be controlled to supply power to the alternating current bus, and the alternating current bus supplies power to the energy storage power supply system, so that the energy storage power supply system is started and enters the running state, to wake up the energy storage power supply system.

It should be understood that, because the available power generation power of the photovoltaic power generation system usually varies with a weather environment, the output available power generation power may be unstable. To improve power supplying, the energy storage power supply system may be used as a power supply source of the microgrid, so that a load powered by the microgrid runs more stably and securely. Certainly, a prerequisite for using the energy storage power supply system to supply power is that the energy storage power supply system has specific stored electric energy. In a possible implementation, an energy storage power supply threshold may be set for the energy storage power supply system. When the energy storage power supply system is in the running state, if the stored electric energy of the energy storage power supply system is greater than or equal to the energy storage power supply threshold, the system controller may control the energy storage power supply system to supply power to the alternating current bus; or if the stored electric energy of the energy storage power supply system is less than the energy storage power supply threshold, the alternating current bus may be controlled to charge the energy storage power supply system. When there are a plurality of energy storage power supply systems, such control is more flexible. An energy storage power supply system having high stored electric energy may supply power to the alternating current bus stably, and an energy storage power supply system having low remaining stored electric energy may increase the stored electric energy by charging the energy storage power supply system by the alternating current bus.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A microgrid system, comprising:
a first photovoltaic power generation system, an alternating current bus, a UPS (Uninterrupted Power System, uninterruptible power supply), a first switch, and a second switch;
the first photovoltaic power generation system comprises at least one first photovoltaic power generation unit and at least one first photovoltaic inverter, is connected to the UPS through the first switch, is connected to the alternating current bus through the second switch, and is configured to supply power to the UPS through the first switch or supply power to the alternating current bus through the second switch; and
the alternating current bus is connected to the UPS through the first switch, and is configured to supply power to the UPS when powered on.

2. The microgrid system according to claim 1, wherein
the first switch comprises a first contact KA1 and a second contact KA2;
the first photovoltaic power generation system is connected to the UPS through the second contact KA2; and the alternating current bus is connected to the UPS through the first contact KA1.

3. The microgrid system according to claim 2, wherein
the first contact KA1 is configured to: be disconnected when the alternating current bus is powered off; and be connected when the alternating current bus is powered on; and
the second contact KA2 is configured to: be connected when the alternating current bus is powered off; and be disconnected when the alternating current bus is powered on.

4. The microgrid system according to claim 2 or 3, wherein
when an available power generation power of the first photovoltaic power generation system is greater than or equal to a first photovoltaic power supply threshold, the first photovoltaic power generation system supplies power to the alternating current bus through the second switch, so that the alternating current bus supplies power to the UPS through the first contact KA1; or
when an available power generation power of the first photovoltaic power generation system is greater than or equal to a first photovoltaic power supply threshold, the first photovoltaic power generation system supplies power to the UPS through the second contact KA2.

5. The microgrid system according to claim 4, wherein
if the second switch is in an off state, when the available power generation power of the first photovoltaic power generation system is greater than the first photovoltaic power supply threshold, the first photovoltaic power generation system supplies power to the UPS through the second contact KA2.

6. The microgrid system according to claim 4, wherein
if the second switch is in an on state, when the available power generation power of the first photovoltaic power generation system is greater than the first photovoltaic power supply threshold, the first photovoltaic power generation system supplies power to the alternating current bus through the second switch, so that the alternating current bus supplies power to the UPS through the first contact KA1.

7. The microgrid system according to any one of claims 1 to 6, further comprising:
at least one second photovoltaic power generation system and a system controller, wherein
the UPS is connected to the system controller, and is configured to supply power to the system controller;
each second photovoltaic power generation system comprises at least one second photovoltaic power generation unit and at least one second photovoltaic inverter, and is configured to supply power to the alternating current bus; and
the system controller is configured to control the second switch to be on or off, and is configured to control the first photovoltaic power generation system and/or the second photovoltaic power generation system to supply power to the alternating current bus.

8. The microgrid system according to any one of claims 1 to 7, further comprising:
at least one energy storage power supply system, wherein
the energy storage power supply system comprises at least one energy storage unit and at least one energy storage converter, and is configured to supply power to the alternating current bus or receive power from the alternating current bus; and
the system controller is further configured to control the energy storage power supply system to supply power to the alternating current bus, or configured to control the alternating current bus to supply power to the energy storage power supply system, so that the energy storage power supply system is started to a running state.

9. The microgrid system according to claim 8, wherein
the system controller is configured to:
when a sum of the available power generation power of the first photovoltaic power generation system and an available power generation power of the second photovoltaic power generation system is greater than a second photovoltaic power supply threshold, control the first photovoltaic power generation system and/or the second photovoltaic power generation system to supply power to the alternating current bus, and control the alternating current bus to supply power to the energy storage power supply system, so that the energy storage power supply system is started to the running state.

10. The microgrid system according to claim 8 or 9, wherein
the system controller is configured to:
when the energy storage power supply system is in the running state, if stored electric energy of the energy storage power supply system is greater than or equal to an energy storage power supply threshold, control the energy storage power supply system to supply power to the alternating current bus; or
when the energy storage power supply system is in the running state, if stored electric energy of the energy storage power supply system is less than an energy storage power supply threshold, control the alternating current bus to charge the energy storage power supply system.
